# EUROPEAN PATENT SPECIFICATION

(11) **EP 1 860 320 B1**
(45) Date of publication and mention of the grant of the patent: **07.01.2009**
(21) Application number: 07108746.4
(22) Date of filing: 23.05.2007
(51) Int. Cl.: F02M 69/04, B62K 11/00, B62K 11/04, F01P 11/16, F02B 61/02, F02D 9/10

(54) **A power unit with an intake system for scooter vehicle**
Antriebseinheit mit Einlasssystem für ein Scooterfahrzeug
Ensemble motopropulseur avec système d'admission pour vehicule du type scooter

(30) Priority: 26.05.2006 JP 2006146884; 26.05.2006 JP 2006146885
(43) Date of publication of application: 28.11.2007
(73) Proprietor: HONDA MOTOR CO., LTD., Tokyo 107-8556 (JP)
(72) Inventor: Ikeda, Kenichiro, Saitama 351-0193 (JP); Miyake, Yutaka, Saitama 351-0193 (JP); Kashima, Takahiro, Saitama 351-0193 (JP); Nukada, Yoshitaka, Saitama 351-0193 (JP)
(74) Representative: Rupp, Christian

(56) References cited:
- EP-A- 1 555 431
- EP-A1- 0 732 497
- JP-A- 4 365 937
- JP-A- 9 021 349

## Description

### BACKGROUND OF THE INVENTION

### Field of the Invention

The present invention relates to an intake system for a scooter vehicle having a swingable power unit and to a coolant temperature sensor mounting structure for the internal combustion engine of the scooter vehicle.

### Description of Background Art

A scooter type vehicle is known that includes a power unit swingably connected to a vehicle body frame. In this vehicle, the power unit integrates an engine, which has a cylinder axis disposed substantially horizontally, with a power transmission system. In such a vehicle, a known arrangement includes a throttle body, which integrates a fuel injection valve, disposed inclinedly, obliquely upwardly forward of a cylinder portion (see, for example, Japanese Patent Laid-open No. 2003-335282).

However, the arrangement disclosed in Japanese Patent Laid-open No. 2003-335282 entails a problem in that a large space for allowing different parts of the power unit to escape during a swing motion of the power unit, since an air cleaner and the like are additionally disposed forward of the throttle body.

A known engine of the abovementioned type includes a cylinder head having a coolant path built therein and a coolant temperature sensor, which detects a temperature of coolant in the coolant path, directly mounted on the cylinder head (see, for example, Japanese Patent No. 3601625 with publication number JP9021349A).

However, the arrangement in Japanese Patent No. 3601625 entails problems in that the coolant temperature sensor protrudes largely from the cylinder head and the cylinder head is shaped complicatedly.

EP-A-1 555 431 describes an engine which is disposed below a seat with a cylinder head arranged on a front side of the vehicle and an intake pipe, extending from above the cylinder head to the rear of the vehicle, which is disposed above the engine. The cylinder head of the engine includes an injector mounting section in which an injector for ejecting a fuel is mounted and an injection nozzle is arranged in a position between an axis of an intake valve and a center axis of an intake port, close to an end of the intake port on the intake valve side. The injector and an intake pipe are arranged so as to be prevented from interfering with each other.

A fuel injection system of an internal combustion engine of a vehicle such as motorcycle, as disclosed in EP-A1-0 732 497, comprises a throttle body of a cylindrical structure having a passage for supplying a fuel-air mixture to a combustion chamber of an engine, a disc-shaped throttle valve disposed in the passage to be rotatable so as to regulate an amount of air flowing through the passage, and an injector means mounted on a peripheral wall of the passage and adapted to inject fuel in the passage at a portion downstream side of the throttle valve with respect to an air flow in the passage.

Finally, the purpose of JP 04 365 937 is to obtain a two cycle fuel injection engine which can conveniently calculate fuel injection time with one water temperature sensor and improve cost performance. For this purpose in a water jacket housing a water pump is provided on one side of a crank case, and a cooling water inlet is formed thereon. The water jacket of the crank case is communicated with a water jacket of a cylinder and a cylinder head. A cooling water outlet is formed on one side of the cylinder head. The cooling water outlet, the cooling water inlet, and a heat exchange are communicated with each other through a hose for circulating cooling water. A water temperature sensor is provided on the water jacket of the cylinder and the cylinder head.

It is therefore an object of the present invention to provide an intake system for a scooter type vehicle, capable of suppressing space required for various parts of a power unit during a swing motion of the power unit, and to provide a coolant temperature sensor mounting structure for an internal combustion engine that can suppress protrusion of the coolant temperature sensor and simplify the cylinder head shape.

### SUMMARY AND OBJECTS OF THE INVENTION

To solve the foregoing problems, according to a first aspect of an embodiment the present invention, an intake system is provided for a scooter-type vehicle (for example, a motorcycle 1 according to an embodiment of the present invention) that has a power unit (for example, a power unit U according to the embodiment of the present invention) swingably connected to a vehicle body frame (for example, a vehicle body frame F according to the embodiment of the present invention). The power unit integrally assembles an engine (for example, an engine E according to the embodiment of the present invention) having a cylinder axis (for example, a cylinder axis C2 according to the embodiment of the present invention) disposed substantially horizontally with a power transmission system (for example, a power transmission system M according to the embodiment of the present invention).

The intake system includes a throttle body (for example, a throttle body 55 according to the embodiment of the present invention), an air cleaner (for example, an air cleaner 56 according to the embodiment of the present invention), an intake path (for example, an intake path 58 according to the embodiment of the present invention), and a fuel injection valve injecting fuel into the intake path (for example, an injector 59 according to the embodiment of the present invention). Specifically, the throttle body is disposed immediately above a cylinder portion (for example, a cylinder portion 22 according to the embodiment of the present invention).

The air cleaner is disposed rearward of the throttle body. The intake path extends from the air cleaner to a combustion chamber (for example, a combustion chamber 37 according to the embodiment of the present invention) via the throttle body and an intake port (for example, an intake port 38 according to the embodiment of the present invention) disposed on an upper side of the cylinder portion. The intake path is formed into a U shape, in a side view, opening toward a proximal end side of the cylinder portion. The fuel injection valve is disposed in the throttle body inclinedly at a portion in the throttle body opposite to the cylinder portion across the intake path.

A coolant temperature sensor mounting structure is provided for an internal combustion engine. The internal combustion engine (for example, an engine E according to an embodiment of the present invention) includes a cylinder block (for example, a cylinder block 32 according to the embodiment of the present invention), a cylinder head (for example, a cylinder head 33 according to the embodiment of the present invention), and a coolant temperature sensor (for example, a coolant temperature sensor 103 according to the embodiment of the present invention). Specifically, the cylinder block forms a cylinder bore (for example, a cylinder bore 32a according to the embodiment of the present invention). The cylinder head includes a coolant path (for example, a head side water jacket 102 according to the embodiment of the present invention). The coolant temperature sensor detects a temperature of coolant in the cylinder head. The cylinder block includes a sensor mounting portion (for example, a sensor mounting portion 104 according to the embodiment of the present invention) for the coolant temperature sensor.

The coolant temperature sensor has an axis extending at an acute angle with respect to a cylinder axis.

The coolant temperature sensor has an axis extending in parallel with an axis of an intake path (for example, an intake path 58 according to the embodiment of the present invention).

According to a second aspect of an embodiment of the present invention, a personal property storage box (for example, a personal property storage box 18 according to the embodiment of the present invention) is disposed upward of the power unit.

According to a third aspect of an embodiment of the present invention, the fuel injection valve has an injection port (for example, an injection port 60 according to the embodiment of the present invention) disposed on an intake downstream side of a center of pivotal movement (for example, a pivot 61a according to the embodiment of the present invention) of a valve (for example, a throttle valve 61 according to the embodiment of the present invention) in the throttle body and on a side of the center of the pivotal movement of a downstream side end (for example, a downstream side end T according to the embodiment of the present invention) of a valve pivotal movement range (for example, a valve pivotal movement range H according to the embodiment of the present invention).

According to a fourth aspect of an embodiment of the present invention, the sensor mounting portion forms part of a facing surface (for example, a facing surface 32s according to the embodiment of the present invention) with the cylinder head in the cylinder block. Further, the sensor mounting portion forms part of the coolant path in the cylinder head.

According to an fifth aspect of an embodiment of the present invention, the internal combustion engine has the cylinder axis extending substantially horizontally, with the coolant temperature sensor disposed on an upper side of the cylinder block and a personal property storage box (for example, a personal property storage box 18 according to the embodiment of the present invention) disposed upward of the coolant temperature sensor.

Effects of the invention will be described next.

According to the first aspect of an embodiment of the present invention, the throttle body is disposed immediately above the cylinder portion of the engine having the cylinder axis disposed substantially horizontally. Further, the air cleaner is disposed rearward of the throttle body. As a result, the entire power unit including the intake system structural members is built compactly, which helps suppress space required for allowing various parts to escape during a swing motion of the power unit. Further, the intake path is formed into a U shape in a side view, which secures a given length for the entire intake path. At the same time, the fuel injection valve is disposed in the throttle body, which secures a given distance from the fuel injection valve to the combustion chamber. As a result, an amount of fuel blow-by leakage during valve overlap (during which both the intake and exhaust valves are open) can be reduced.

The coolant temperature sensor is mounted in the cylinder block having a relatively small and simple construction as compared with the cylinder head. This allows a dead space on the outside of the cylinder block to be used effectively for disposing the coolant temperature sensor and helps suppress an amount of protrusion of the coolant temperature sensor. The coolant temperature mounting structure according to the first aspect of the present invention further eliminates the sensor mounting portion for the coolant temperature sensor from the cylinder head. This contributes to a simplified shape of the cylinder head. Furthermore, the coolant temperature sensor is disposed adjacent the water jacket of the cylinder block. This helps improve detection performance of the coolant temperature sensor.

The amount of protrusion of the coolant temperature sensor from the cylinder block can be further suppressed. As a result, necessity for a protective member or the like for the coolant temperature sensor can be reduced. Further, the cylinder and surrounding parts can be made more compact, improving appearance of the internal combustion engine.

The amount of protrusion of the coolant temperature sensor from the cylinder block can be suppressed. This allows the intake path to be closer to the cylinder block, making for an even more compact internal combustion engine overall.

According to the second aspect of an embodiment of the present invention, the fuel injection valve is disposed inclinedly on the side opposite to the cylinder portion in the throttle body (specifically, on the upper side). As compared with an arrangement, in which the fuel injection valve is disposed in a vertically upright position, an amount of upward protrusion of the fuel injection valve can be suppressed. As a result, the personal property storage box can be arranged to have a large capacity.

According to the third aspect of an embodiment of the present invention, the injection port of the fuel injection valve is disposed on the intake downstream side of the valve, and on the intake upstream side as much as feasible. This provides an even longer distance between the fuel injection valve and the combustion chamber. This also allows fuel to be injected into an intake air that has relatively faster flow velocity and forms turbulence immediately after the valve. This helps promote homogeneous mixing of fuel and air.

According to the fourth aspect of an embodiment of the present invention, the detector of the coolant temperature sensor can be made to be in sufficient and direct contact with the coolant. As a result, the detection performance of the coolant temperature sensor can be even further enhanced. Further, sealing is achieved in the facing surface of the cylinder block with the cylinder head, making the coolant temperature mounting structure less leaky.

According to the fifth aspect of an embodiment of the present invention, the amount of protrusion of the coolant temperature sensor from the cylinder block can be suppressed. As a result, if a personal property storage box storing a helmet and the like is to be disposed upward of the cylinder, such a storage box can have a large capacity.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:

FIG 1 is a left side elevational view showing a motorcycle according to an embodiment of the present invention.

FIG. 2 is a left side elevational view showing an engine and surrounding parts of a power unit of the motorcycle.

FIG. 3 is a plan view showing the power unit and surrounding parts.

FIG 4 is an exploded cross-sectional view showing the engine.

FIG. 5 is a perspective view showing the power unit and surrounding parts as viewed from the rear left direction.

FIG. 6 is a left side elevational view showing an upper portion of a cylinder and parts surrounding an intake path of the engine.

FIG. 7 is a view showing a cylinder block of the engine, looking from the side of a crankcase.

FIG. 8 is a view showing a cylinder head of the engine, looking from the side of the crankcase.

### DETAILED DESCRIPTION OF THE PREFERRED EMBODIMENTS

One embodiment to which the present invention is applied will be described below with reference to an exemplary embodiment shown in the accompanying drawings. In the descriptions given hereunder, longitudinal, lateral, and other directions are to be considered the same as in the vehicle unless otherwise specified. Further, in the accompanying drawings, an arrow FR indicates a forward direction of the vehicle, an arrow LH indicates a leftward direction of the vehicle, and an arrow UP indicates an upward direction of the vehicle.

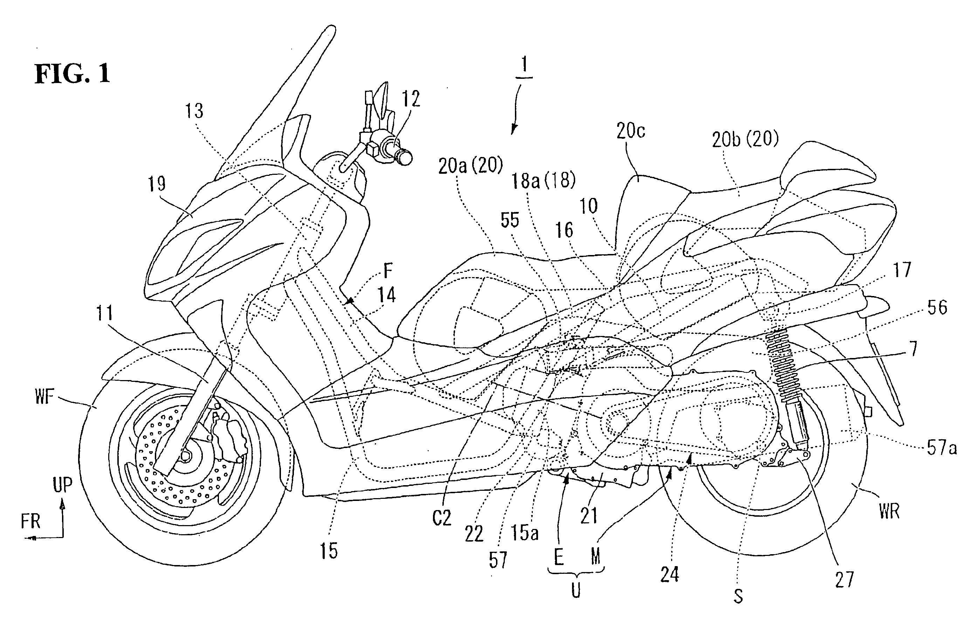

In a scooter-type motorcycle 1 as a low-deck vehicle shown in FIG. 1, a vehicle body frame F includes a head pipe 13 disposed at a front end portion thereof. A front fork 11 journaling a front wheel WF and a steering handlebar 12 are steerably supported on the head pipe 13. An integrated swing type power unit (hereinafter referred to as "power unit") U is disposed on a lower side at a rear portion of the vehicle body frame F. The power unit U includes an engine E as a power plant for the motorcycle 1 disposed at a front portion thereof and an axle S for a rear wheel WR as a drive wheel disposed at a rear portion thereof.

An upper side of a front portion of the power unit U is vertically swingably supported on the rear portion of the vehicle body frame F via a suspension link not shown. A rear end portion of the power unit U is, on the other hand, supported by a rear end portion of the vehicle body frame F via a rear cushion 7 as a shock absorber. The power unit U having the arrangements as described above is vertically swingable with the rear wheel WR about a pivot of the suspension link, constituting what is called a unit swing type rear suspension.

The vehicle body frame F includes a pair of left and right upper down frames 14 and a pair of left and right lower down frames 15. The upper down frames 14 extend from the head pipe 13 downwardly toward the rear. The lower down frames 15 extend from the head pipe 13 downwardly toward the rear at a location below the upper down frames 14 before being bent and extended rearwardly. Rear portions of the lower down frames 15 are rear inclined portions 15a being bent and extended upwardly toward the rear. Rear ends of the upper down frames 14 are joined to lower sides of the rear inclined portions 15a.

Front ends of a pair of left and right seat rails 16, which are inclined upwardly toward the rear, are joined to rear portions of the upper down frames 14. The seat rails 16 are inclined more gently than the rear inclined portions 15a. The rear inclined portions 15a have upper ends thereof joined to intermediate portions of the seat rails 16. Bracing support frames 10 are laid down across rear portions of the seat rails 16 and intermediate portions of the rear inclined portions 15a. The head pipe 13, the upper down frames 14, the lower down frames 15, the seat rails 16, and the support frames 10 mainly constitute the vehicle body frame F.

A vehicle body cover 19 covers a space surrounding the vehicle body frame F. A tandem-type occupant seat 20 is openably disposed on an upper portion of a rear portion of the vehicle body cover 19. A personal property storage box 18, in which a helmet and other personal property can be stored, is disposed downward of the occupant seat 20 and upward of the power unit U.

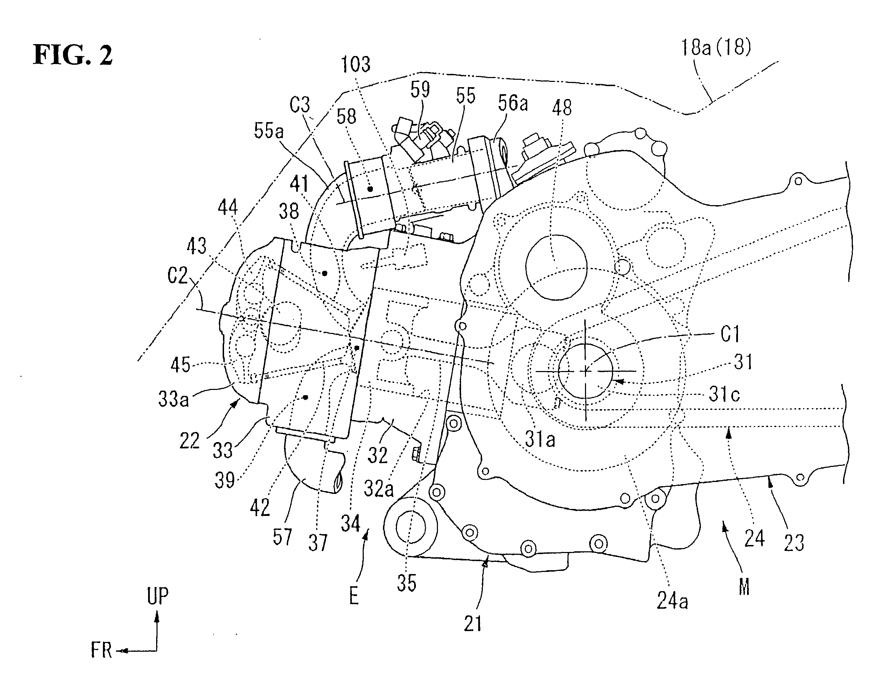

Referring also to FIGS. 2, 3, and 4, the power unit U integrates the engine E disposed at the front portion thereof and a power transmission system M disposed in the rear portion thereof on the left side.

The engine E is a water-cooled, single-cylinder engine having a rotational axis C1 of a crankshaft 31 extending along the lateral direction. The engine E includes a cylinder portion 22 that protrudes forwardly from a front end portion of a crankcase 21 (more specifically, slightly inclined upwardly toward the front). An axis extending along the protruding direction of the cylinder portion 22 will hereunder be referred to as "cylinder axis C2."

The crankcase 21 includes left and right case half bodies 21a, 21b. A left case main body 23a is integrally formed with the left case half body 21a of the crankcase 21. The left case half body 21 a bulges leftwardly from a rear portion on the left side thereof and then extends rearwardly to form the left case main body 23a. The left case main body 23a, and a left case cover 23b fitted to a left side of the left case main body 23a, constitute a transmission case 23 in the power transmission system M. A right case cover 21c is fitted to a right side portion of the crankcase 21.

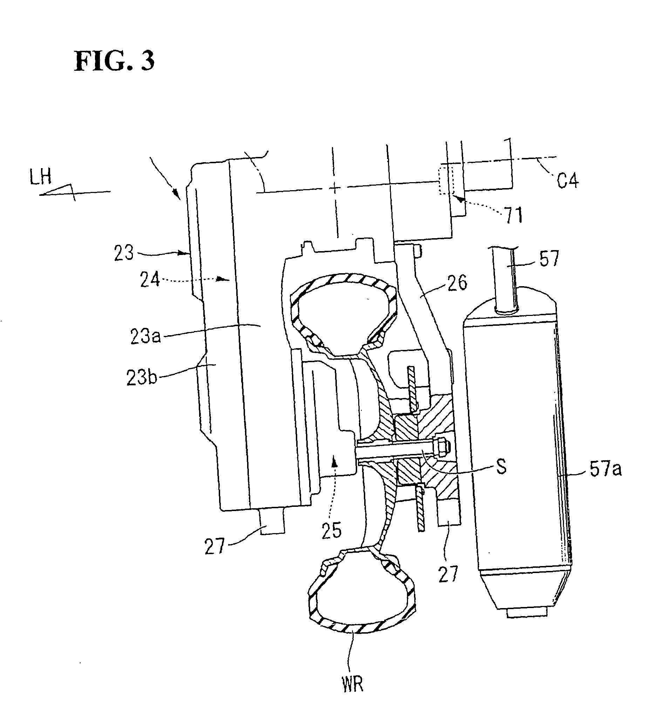

Referring to FIG. 3, reference numeral 21d represents a pump cover that is fitted to a right outside portion of the right case cover 21c. Reference numeral 62 represents an oil filter fitted to a right outside portion of the pump cover 21 d. Reference numeral 54 represents an oil cooler mounted to a front end portion of the right case cover 21 c.

The power transmission system M includes a belt type continuously variable transmission 24 (see FIG. 1) and a gear type reduction mechanism 25 (see FIG 3). The belt type continuously variable transmission 24 includes front and rear pulleys around which an endless belt is mounted. The gear type reduction mechanism 25 reduces a speed of an output from the belt type continuously variable transmission 24 and produces a resultant output to a rear portion output shaft (axle S). The belt type continuously variable transmission 24 is accommodated longitudinally across the transmission case 23. The gear type reduction mechanism 25 is accommodated in a rear portion inside the transmission case 23. The rear wheel WR is mounted on the axle S that protrudes to the right in the rear portion of the transmission case 23.

An auxiliary arm 26 extends longitudinally to support a right end portion of the axle S. The auxiliary arm 26 has a front end portion thereof mounted to the right side in a rear portion of the right case half body 21b of the crankcase 21 (see FIG. 3). The auxiliary arm 26 and the transmission case 23 serve as left and right arms for supporting the rear wheel WR. As such, the entire power unit U can be vertically swung with the rear wheel WR. A unit side cushion connection 27, which journals a lower end portion of each of the pair of left and right rear cushions 7, is disposed at a rear end portion of each of the transmission case 23 and the auxiliary arm 26. An upper end portion of each of the rear cushions 7 is journaled at a vehicle body side cushion connection 17 at a rear end portion of each of the left and right seat rails 16.

Referring to FIG 2, the cylinder portion 22 includes, as main components thereof, a cylinder block 32, a cylinder head 33, and a head cover 33a. The cylinder block 32 is mounted on a front end portion of the crankcase 21. The cylinder head 33 is mounted on a front end portion of the cylinder block 32. The head cover 33a is mounted on a front end portion of the cylinder head 33.

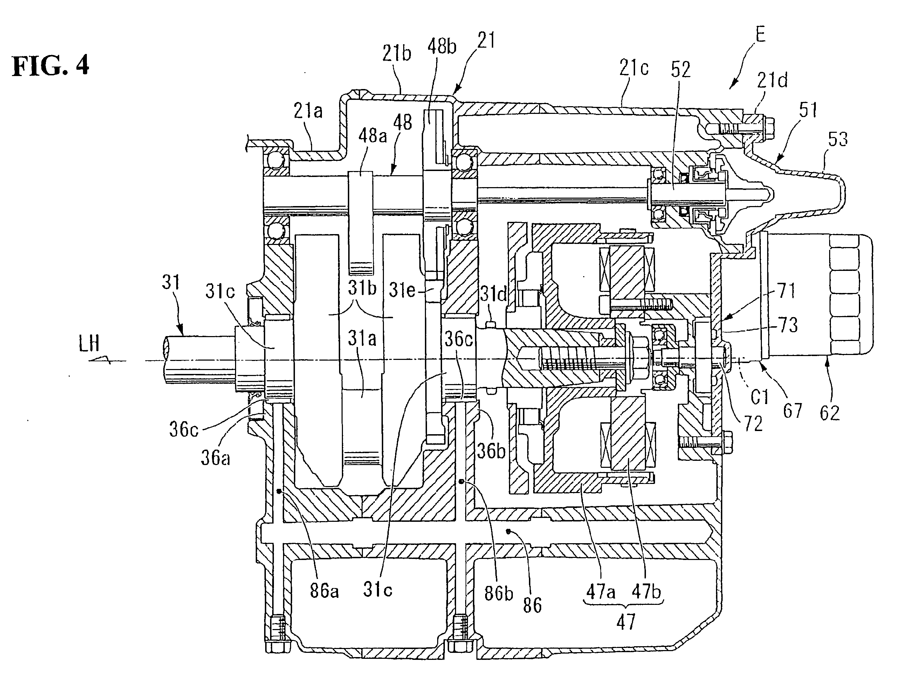

A cylinder bore 32a extending along the cylinder axis C2 is formed inside the cylinder block 32. A piston 34 is reciprocally movably fitted in the cylinder bore 32a. A small end of a connecting rod 35 is connected to the piston 34 and a big end of the connecting rod 35 is connected to a crankpin 31a of the crankshaft 31. The crankshaft 31 includes left and right journals 31 c on even outer sides of left and right crank webs 31b that support the crankpin 31a. The left and right journals 31c are rotatably supported on left and right bearing portions 36a, 36b of the crankcase 21 via metal bearings 36c (see FIG. 4).

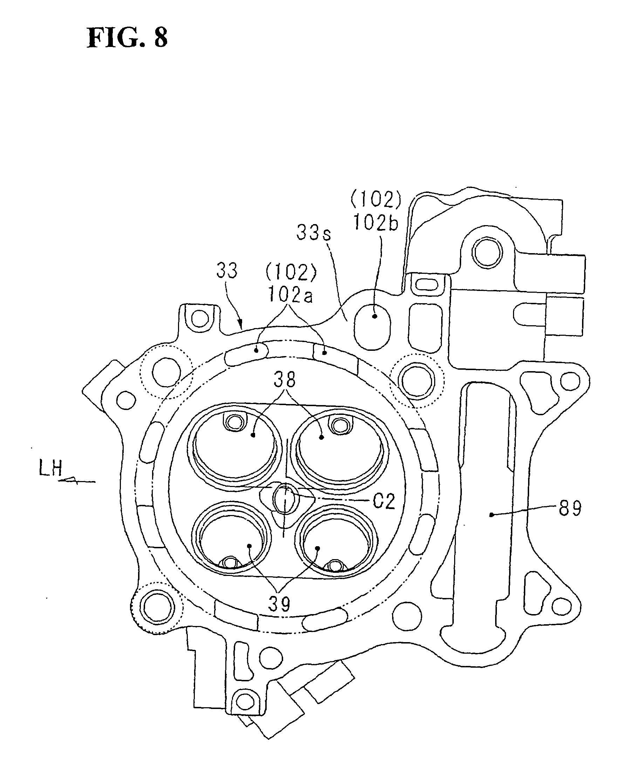

The cylinder head 33 closes a front end opening of the cylinder bore 32a to form a combustion chamber 37 with the piston 34 positioned at a top dead center thereof, It is to be noted herein that the engine E is an OHC four-valve type. In the engine E, a roof forming portion of the combustion chamber 37 includes two each downstream side openings of intake ports 38 and upstream side openings of exhaust ports 39 formed therein (see FIG. 8). An intake valve 41 and an exhaust valve 42 open and close each of these openings.

These valves 41, 42 extend forwardly to form a V shape in a side view. A single camshaft 43 is disposed between each pair of these stems. The camshaft 43 is rotatably driven with the crankshaft 31 by a cam chain not shown. The rotatable drive of the camshaft 43 causes rocker arms 44, 45 on the intake and exhaust sides to swing. The rocker arms 44, 45 extend across the camshaft 43 and stem upper ends of the valves 41, 42. The swing motion of the rocker arms 44, 45 results in the valves 41, 42 reciprocally moving to open or close the opening of each of the intake and exhaust ports 38, 39 on the side of the combustion chamber 37. A drive sprocket 31d, around which the cam chain disposed on the right side of the cylinder portion 22, is disposed on the right of a right journal 31c of the crankshaft 31 (see FIG 4).

A drive pulley 24a for the belt type continuously variable transmission 24 is coaxially disposed at a left end portion of the crankshaft 31. Referring to FIG 4, an outer rotor 47a in a generator 47 is coaxially disposed, on the other hand, on a right end portion of the crankshaft 31. The outer rotor 47a is a cup-shaped member opening to the right. The outer rotor 47a protrudes rightwardly from a right side surface of the crankcase 21 and is disposed so as to enter an inside of the right case cover 21c that covers the right side surface of the crankcase 21. A stator coil 47b supported by the right case cover 21 c is disposed inside the outer rotor 47a.

A balancer shaft 48 separate from the crankshaft 31 is disposed upward of the crankshaft 31. The balancer shaft 48 has a rotational axis that is in parallel with the crankshaft 31. A driven gear 48b on a right end portion of the balancer shaft 48 is brought into mesh with a drive gear 31e of the crankshaft 31, which makes the balancer shaft 48 rotate at the same speed as the crankshaft 31. A balancer weight 48a located at a laterally midway point of the balancer shaft 48 is disposed so as to enter a space between the crank webs 31 b, while avoiding the crankpin 31 a. The balancer weight 48a has a rotational range that overlaps partly with that of the crank webs 31b.

A water pump 51 for circulating coolant through the engine E is disposed rightward of the balancer shaft 48. The water pump 51 is disposed between the right case cover 21c and the pump cover 21d. The water pump 51 has a drive shaft 52 .. disposed coaxially with the balancer shaft 48. When the drive shaft 52 extends laterally inwardly to be connected to a right end of the balancer shaft 48 in a condition of being incapable of relative rotation, the water pump 51 is driven as the crankshaft 31 and the balancer shaft 48 rotate. A casing 53 for the water pump 51 is formed from the right case cover 21 c and the pump cover 21 d.

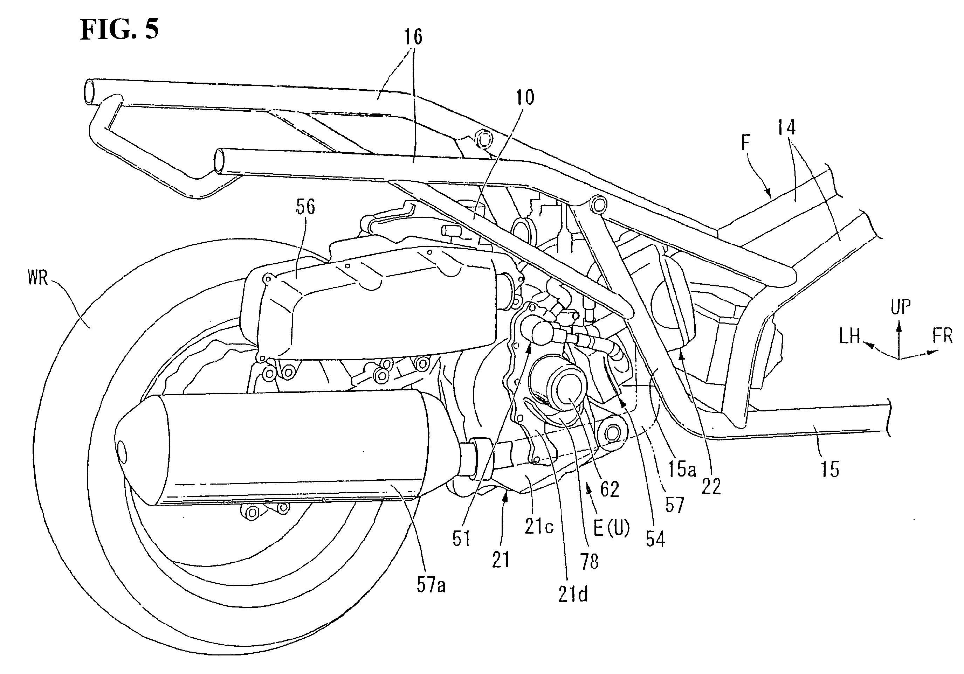

Referring also to FIG. 5, a portion of the pump cover 21d forming the casing 53 is protruded laterally outwardly. A plurality of hoses for coolant inflow and outflow is connected to areas surrounding the protrusion.

The oil cooler 54 mounted at the front end portion of the right case cover 21c is a water-cooled type using coolant supplied from the water pump 51. The oil cooler 54 is disposed so as to protrude forwardly substantially along the cylinder axis C2 from the front end portion of the right case cover 21c. Engine oil in the right case cover 21c is introduced in the oil cooler 54 through a proximal end side thereof. The engine oil flows through a predetermined path and is thereby cooled before being returned back into the right case cover 21c through the same proximal end side thereof.

Referring to FIGS. 1 and 2, a throttle body 55 as an intake system part is disposed upward of the cylinder portion 22 of the engine E. A front end (downstream side) of the throttle body 55 is connected to an upstream side opening of the intake port 38 on an upper side of the cylinder head 33 through an insulator 55a. An air cleaner 56 is disposed rightwardly upward of the power unit U and rearward of the throttle body 55 (see FIG 5). The air cleaner 56 is connected to a rear end (upstream side) of the throttle body 55 via a connecting tube 56a. A proximal end of an exhaust pipe 57 is connected to a downstream side opening of the exhaust port 39 on the lower side of the cylinder portion 22. The exhaust pipe 57 is bent around the engine E and extended rearwardly to be eventually connected to a silencer 57a disposed on the right side of the rear wheel WR.

An intake path 58 from the air cleaner 56 to the downstream side opening of the intake port 38 is formed into a U shape opening toward a proximal end side (on the side of the crankcase 21) of the cylinder portion 22 in a side view.

More specifically, the throttle body 55 is disposed such that an axis C3 of the intake path 58 formed therein extends substantially horizontally (more specifically, inclined slightly upwardly toward the rear). The insulator 55a, which connects the front end of the throttle body 55 to upstream side opening of the intake port 38, is formed such that the intake path 58 that continues from the throttle body 55 is curved downwardly. The intake port 38 is formed such that the intake path 58 that continues from the insulator 55a is curved obliquely downwardly toward the rear from the upstream side opening thereof to the downstream side opening thereof.

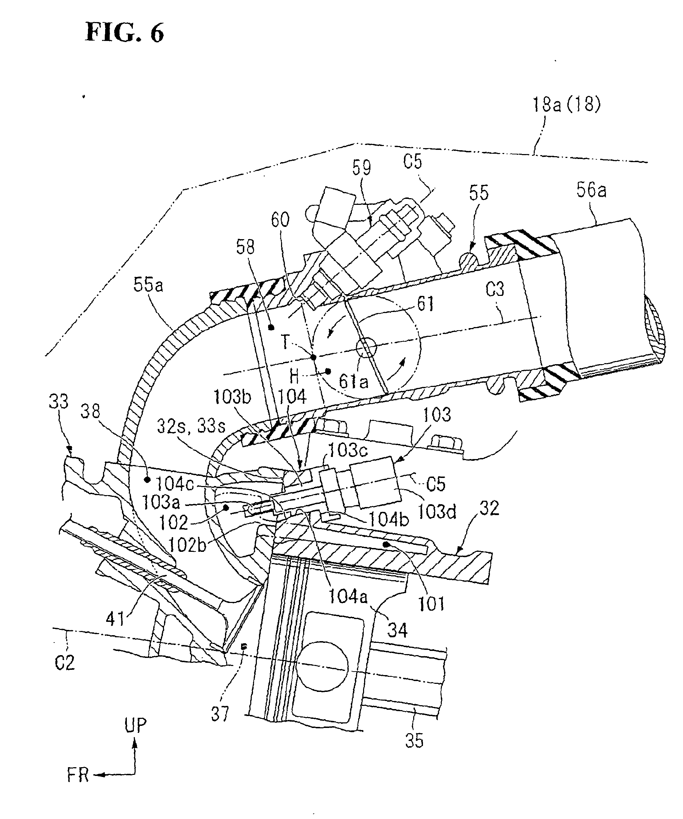

Referring also to FIG. 6, an injector 59 injecting fuel into the intake path 58 is integrally mounted on the throttle body 55. The injector 59 is disposed inclinedly downwardly toward the front with respect to the axis C3 of the throttle body 55 in an upper side of the throttle body 55 (specifically, on the side opposite to the cylinder portion 22 across the intake path 58). The injector 59 has an injection port 60 at a front end hereof. The injection port 60 is open in an upper portion inner wall of the throttle body 55 so as to face an inside of the intake path 58.

The throttle body 55 includes a disc-like throttle valve 61 disposed therein to open or close the intake path 58. The throttle valve 61 is pivotally rotatably supported by the throttle body 55 via a pivot 61a that extends substantially laterally. The throttle valve 61 is rotated counterclockwise in FIG. 6 such that an upper portion thereof is moved forward, while a lower portion thereof is moved rearward during throttle opening. It is to be noted herein that the injection port 60 of the injector 59 open in the upper portion inner wall of the throttle body 55 is on an intake downstream side of the pivot 61 a (center of pivotal rotation) of the throttle valve 61. Further, the injection port 60 is located closer on the side of the pivot 61a than an intake downstream side end T of a range (valve pivotal rotation range) H required for the throttle valve 61 to be pivotally rotated.

Referring to FIG. 1, the occupant seat 20 includes a front half portion and a rear half portion. The front half portion constitutes a rider seat 20a. The rear half portion constitutes a rear passenger seat 20b that is disposed upwardly relative to the rider seat 20a through upward step-like displacement. The rider seat 20a and a seat back 20c disposed at a rear end thereof may, for example, be rotated via a hinge not shown, which provides access to the personal property storage box 18 disposed longitudinally across the occupant seat 20.

A bottom wall 18a of the personal property storage box 18 includes an upwardly protruding curved shape at a position downward of the rider seat 20a so as to circumvent the cylinder portion 22 of the engine E, the throttle body 55, and the like. The bottom wall 18a thereby ensures an escape space for the engine E, the intake system parts, and the like required during vertical swing motion of the power unit U.

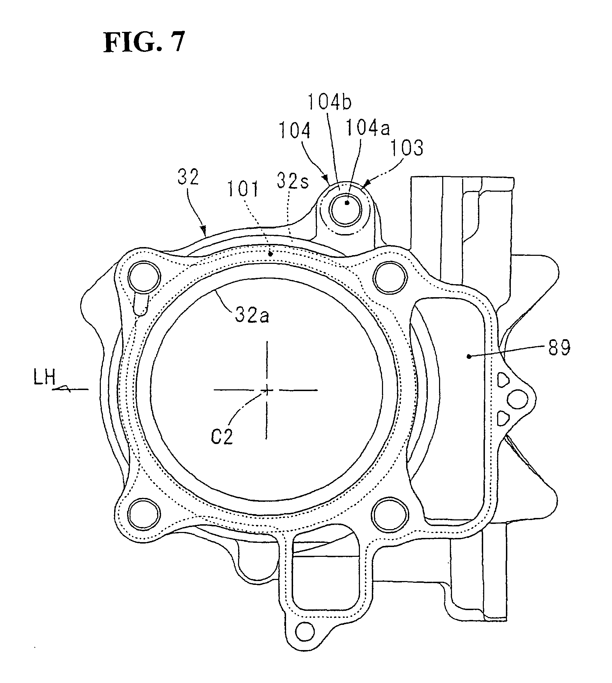

A water jacket and surrounding parts of the cylinder portion 22 will be described below with reference to FIGS. 6, 7, and 8.

The cylinder block 32 includes a cylinder side water jacket 101 formed therein so as to surround an outer periphery of the cylinder bore 32a. Further, the cylinder head 33 includes a head side water jacket 102 formed therein so as to surround the intake and exhaust valves 41, 42. The cylinder side water jacket 101 is annularly open to the side of the cylinder head 33 at a facing surface 32s of the cylinder block 32 with the cylinder head 33. A plurality of cylinder side openings 102a of the head side water jacket 102 is formed along a circumference about the cylinder axis C2 in a facing surface 33s of the cylinder head 33 with the cylinder block 32. The facing surfaces 32s, 33s are brought into tight contact with each other via a predetermined gasket, which provides communication between the water jackets 101, 102 to permit circulation of coolant.

A coolant temperature sensor 103, which detects a temperature of coolant in the cylinder head 33, may be disposed, for example, at an upper wall right side of the cylinder block 32. With respect to a sensor mounting portion 104 formed near the facing surface 32s of the cylinder block 32, the coolant temperature sensor 103 is mounted so as to be passed through from the proximal end side (the side of the crankcase 21) of the cylinder portion 22. An axis (hereinafter, "sensor axis") C5 that extends along a direction of insertion of the coolant temperature sensor 103 is inclined relative to the cylinder axis C2 so as to be more inward of the cylinder at closer distances from the side of the cylinder head 33. In addition, the sensor axis C5 is inclined at an acute angle relative to the cylinder axis C2.

The coolant temperature sensor 103 includes a pin-like detector 103a extending along the sensor axis C5 disposed at a leading end side in the insertion direction of the coolant temperature sensor 103. The detector 103a has a thermistor built therein. A shaft portion 103b of a relatively large diameter extending along the sensor axis C5 continues from a proximal end side of the detector 103a. Further, an enlarged diameter portion 103c is disposed on a proximal end side of the shaft portion 103b. In addition, a connector 103d is integrally retained at the enlarged diameter portion 103c. The connector 103d protrudes toward the side of the crankcase 21 so as to follow along the sensor axis C5.

The sensor mounting portion 104 includes a sensor insertion hole 104a and a sensor mounting seating surface 104b formed therein. The sensor insertion hole 104a extends along the sensor axis C5. The sensor mounting seating surface 104b is orthogonal to the sensor axis C5. The coolant temperature sensor 103 is secured in position in the sensor mounting portion 104 as follows. Specifically, external threads formed on an outer periphery of the shaft portion 103b is screwed into internal threads formed in an inner periphery of the sensor insertion hole 104a, and a leading end surface of the enlarged diameter portion 103c is thereby brought into tight contact with the sensor mounting seating surface 104b. The coolant temperature sensor 103 is, at this time, disposed within a dead space between the throttle body 55 disposed immediately upward of the coolant temperature sensor 103 and the cylinder block 32. At the same time, the coolant temperature sensor 103 is disposed adjacent the cylinder side water jacket 101. This results in the sensor axis C5 of the coolant temperature sensor 103 being substantially in parallel with the axis C3 of the intake path 58 in the throttle body 55.

The sensor mounting portion 104 includes a surface on the side of the cylinder head 33. This particular surface of the sensor mounting portion 104 forms part of the facing surface 32s of the cylinder block 32. A portion of the sensor insertion hole 104a on the side of the cylinder head 33 includes a counterbored portion 104c leaving the aforementioned threads. The facing surface 33s of the cylinder head 33 includes a sensor communication hole 102b formed therein so that the sensor communication hole 102b continues to the counterbored portion 104c.

The detector 103a of the coolant temperature sensor 103 can enter the head side water jacket 102 through this sensor communication hole 102b, thereby directly detecting the temperature of the coolant in the head side water jacket 102. The sensor communication hole 102b and the counterbored portion 104c form part of the head side water jacket 102 by extending across the cylinder head 33 and the cylinder block 32. Sealing of the portion in question is nonetheless achieved properly by the gasket placed between the facing surfaces 32s, 33s.

As described heretofore, the intake system according to the embodiment of the present invention is adapted to the motorcycle 1 including the power unit U connected swingably to the vehicle body frame F. The power unit U integrally assembles the engine E having the cylinder axis C2 disposed substantially horizontally with the power transmission system M. The throttle body 55 is disposed immediately above the cylinder portion 22. The air cleaner 56 is disposed rearward of the throttle body 55.

The intake path 58 extends from the air cleaner 56 to the combustion chamber 37 via the throttle body 55 and the intake port 38 disposed on the upper side of the cylinder portion 22. The intake path 58 is formed into a U shape, in a side view, opening toward the proximal end side of the cylinder portion 22. The injector 59 injecting fuel into the intake path 58 is disposed in the throttle body 55 inclinedly at a portion in the throttle body 55 opposite to the cylinder portion 22 across the intake path 58.

According to the foregoing arrangements, the throttle body 55 is disposed immediately above the cylinder portion 22 of the engine E having the cylinder axis C2 disposed substantially horizontally. Further, the air cleaner 56 is disposed rearward of the throttle body 55. As a result, the entire power unit U including the intake system structural members is built compactly, which helps suppress space required for allowing various parts to escape during a swing motion of the power unit U. Further, the intake path 58 is formed into a U shape in a side view, which secures a given length for the entire intake path 58. At the same time, the injector 59 is disposed in the throttle body 55, which secures a given distance from the injector 59 to the combustion chamber 37. As a result, the amount of fuel blow-by leakage during valve overlap of the engine E can be reduced.

In the aforementioned intake system according to the embodiment of the present invention, the personal property storage box 18 is disposed upward of the power unit U. As a result, the injector 59 is disposed inclinedly on the side opposite to the cylinder portion 22 in the throttle body 55 (specifically, on the upper side). As compared with an arrangement, in which the injector 59 is disposed in a vertically upright position, the amount of upward protrusion of the injector 59 can be suppressed. As a result, the personal property storage box 18 can be arranged to have a large capacity.

In the aforementioned intake system according to the embodiment of the present invention, the injection port 60 of the injector 59 is disposed on the intake downstream side of a pivot 61 a of the throttle valve 61 in the throttle body, and on a side of the pivot 61a of an intake downstream side end T of a valve pivotal movement range H. Accordingly, the injection port 60 of the injector 59 is disposed on the intake downstream side of the throttle valve 61, and on the intake upstream side as much as feasible. This provides an even longer distance between the injector 59 and the combustion chamber 37. This also allows fuel to be injected into an intake air that has relatively faster flow velocity and forms turbulence immediately after the throttle valve 61. This helps promote homogeneous mixing of fuel and air.
As described heretofore, the coolant temperature sensor mounting structure according to the embodiment of the present invention is adapted to the engine E that includes the cylinder block 32 forming the cylinder bore 32a, the cylinder head 33 having the head side water jacket 102, and the coolant temperature sensor 103 that detects the temperature of the coolant in the cylinder head 33. The structure is characterized in that the cylinder block 32 includes the sensor mounting portion 104 for the coolant temperature sensor 103.

According to the coolant sensor mounting structure of the embodiment of the present invention, the coolant temperature sensor 103 is mounted in the cylinder block 32 having a relatively small and simple construction as compared with the cylinder head 33. This allows a dead space on the outside of the cylinder block 32 to be used effectively for disposing the coolant temperature sensor 103 and helps suppress an amount of protrusion of the coolant temperature sensor 103. The structure further eliminates the sensor mounting portion 104 for the coolant temperature sensor 103 from the cylinder head 33. This contributes to a simplified shape of the cylinder head 33. Furthermore, the coolant temperature sensor 103 is disposed adjacent the cylinder side water jacket 101 of the cylinder block 32. This helps improve detection performance of the coolant temperature sensor 103.

In the aforementioned coolant temperature sensor mounting structure according to the embodiment of the present invention, the sensor mounting portion 104 forms part of the facing surface 32s of the cylinder block 32 with the cylinder head 33. At the same time, the sensor mounting portion 104 also forms part of the head side water jacket 102 of the cylinder head 33. This allows the detector 103a of the coolant temperature sensor 103 to be in sufficient and direct contact with the coolant. As a result, the detection performance of the coolant temperature sensor 103 can be even further enhanced. Further, sealing is achieved in the facing surface 32s of the cylinder block 32 with the cylinder head 33, making the structure less leaky.

In the aforementioned coolant temperature sensor mounting structure according to the embodiment of the present invention, a direction along the axis C5 of the coolant temperature sensor 103 and a direction along the cylinder axis C2 form an acute angle in a side view. This helps suppress further the amount of protrusion of the coolant temperature sensor 103 from the cylinder block 32. As a result, necessity for a protective member or the like for the coolant temperature sensor 103 can be reduced. Further, the cylinder and surrounding parts can be made more compact, improving appearance of the engine E.

In the aforementioned coolant temperature sensor mounting structure according to the embodiment of the present invention, the direction along the axis C5 of the coolant temperature sensor 103 and a direction along the axis C3 of the intake path 58 extend substantially in parallel with each other in a side view. This helps suppress the amount of protrusion of the coolant temperature sensor 103 from the cylinder block 32. This allows the intake path 58 to be closer to the cylinder block 32, making for an even more compact engine E overall.

In the aforementioned coolant temperature sensor mounting structure according to the embodiment of the present invention, the engine E has the cylinder axis C2 extending substantially horizontally, with the coolant temperature sensor 103 disposed on the upper side of the cylinder block 32 and the personal property storage box 18 disposed upward of the coolant temperature sensor 103. The amount of protrusion of the coolant temperature sensor 103 from the cylinder block 32 can thus be suppressed. As a result, if it is desired that a relatively large-sized personal property storage box 18 storing a helmet and the like is disposed upward of the cylinder, such a storage box can have a large capacity.

## Claims

1. A power unit with an intake system for a scooter vehicle, the power unit integrally assembling an engine having a cylinder axis (C2) disposed substantially horizontally with a power transmission system, the intake system comprising:
- a throttle body (55) disposed immediately above a cylinder portion (22) and having an axis (C3);
- an air cleaner (56) disposed rearwardly relative to the throttle body (55);
- an intake path (58) extending from the air cleaner (56) to a combustion chamber (37) via the throttle body (55), and an intake port disposed on an upper side of the cylinder portion (22), the intake path (58) being formed into a U shape in a side view, and opening toward a proximal end side of the cylinder portion (22); and
- a fuel injection valve injecting fuel into the intake path (58),
**characterized in that**
- the fuel injection valve is disposed at a portion in the throttle body (55) that is disposed on a side of the intake path (58) that is opposite to where the cylinder portion (22) is disposed, and
- the fuel injection valve having an axis that is inclined relative to an axis of the throttle body (55),
- wherein the cylinder portion (22) includes a cylinder head (33) including a coolant path, a coolant temperature sensor (103) detecting a temperature of coolant in the cylinder head (33), and a cylinder block (32) forming a cylinder bore (32a) and including a sensor mounting portion (104) for the coolant temperature sensor (103), and
- wherein the coolant temperature sensor (103) has an axis (C5) which extends at an acute angle with respect to the cylinder axis (C2) and which extends substantially in parallel with the axis (C3) of the throttle body (55).

2. The power unit according to claim 1,
wherein the fuel injection valve has an injection port (60) disposed on an intake downstream side of a center of pivotal movement of a valve in the throttle body (55) and on a side of the center of the pivotal movement of a downstream side end of a valve pivotal movement range.

3. The power unit according to any of the preceding claims,
- wherein the sensor mounting portion (104) forms part of a facing surface with the cylinder head (33) in the cylinder block (32), and
- the sensor mounting portion (104) forms part of the coolant path in the cylinder head (33).

4. Scooter vehicle, comprising a power unit according to claim 1,
wherein a personal property storage box is disposed upward of the power unit.

5. Scooter vehicle according to claim 4,
wherein the internal combustion engine has a cylinder axis (C2) extending substantially horizontally, with the coolant temperature sensor (103) disposed on an upper side of the cylinder block (32) and a personal property storage box (18) disposed upward of the coolant temperature sensor (103).

## Patentansprüche

1. Antriebseinheit mit einem Einlasssystem für ein Motorroller-Fahrzeug, wobei die Antriebseinheit integral einen Motor zusammenfügt, welcher eine Zylinderachse (C2) aufweist, welche im Wesentlichen horizontal mit einem Kraftübertragungssystem angeordnet ist, wobei das Einlasssystem umfasst:
- einen Drosselkörper (55), welcher direkt über einem Zylinderabschnitt (22) angeordnet ist, und welcher eine Achse (C3) aufweist;
- einen Luftreiniger (56), welcher rückwärtig relativ zu dem Drosselkörper (55) angeordnet ist;
- einen Einlasspfad (58), welcher sich von dem Luftreiniger (56) zu einer Verbrennungskammer (37) über den Drosselkörper (55) erstreckt, und eine Einlassöffnung, welche an der oberen Seite des Zylinderabschnitts (22) angeordnet ist, wobei der Einlasspfad (58) in einer U-Form in einer Seitenansicht gebildet ist, und sich in Richtung zu einer proximalen Endseite des Zylinderabschnitts (22) öffnet; und
- ein Brennstoffeinspritzventil, welches Brennstoff in den Einlasspfad (58) einspritzt;
**dadurch gekennzeichnet, dass**
- das Brennstoffeinspritzventil an einem Abschnitt in dem Drosselkörper (55) angeordnet ist, welcher auf einer Seite des Einlasspfads (58) angeordnet ist, welcher gegenüberliegend dazu ist, wo der Zylinderabschnitt (22) angeordnet ist, und
- das Brennstoffeinspritzventil eine Achse aufweist, welche relativ zu einer Achse des Drosselkörpers (55) geneigt ist,
- wobei der Zylinderabschnitt (22) einen Zylinderkopf (33) enthält, welcher einen Kühlmittelpfad, einen Kühlmitteltemperatursensor (103), welcher eine Temperatur des Kühlmittels in dem Zylinderkopf (33) detektiert, und einen Zylinderblock (32) aufweist, welcher eine Zylinderbohrung (32a) bildet, und welcher einen Sensormontageabschnitt (104) für den Kühlmitteltemperatursensor (103) aufweist, und
- wobei der Kühlmitteltemperatursensor (103) eine Achse (C5) aufweist, welche sich in einem spitzen Winkel hinsichtlich der Zylinderachse (C2) erstreckt, und welcher sich im Wesentlichen parallel zu der Achse (C3) des Drosselkörpers (55) erstreckt.

2. Antriebseinheit gemäß Anspruch 1,
wobei das Brennstoffeinspritzventil eine Einlassöffnung (60) aufweist, welche an einer stromabwärtigen Seite eines Zentrums der Drehbewegung eines Ventils in dem Drosselkörper (55) und auf einer Seite des Zentrums der Drehbewegung eines Endes einer stromabwärtigen Seite eines Ventildrehbewegungsbereichs angeordnet ist.

3. Antriebseinheit gemäß irgendeinem der vorherigen Ansprüche,
- wobei der Sensormontageabschnitt (104) einen Teil einer vorderen Oberfläche mit dem Zylinderkopf (33) in dem Zylinderblock (32) bildet, und
- der Sensormontageabschnitt (104) einen Teil des Kühlmittelpfads in dem Zylinderkopf (33) bildet.

4. Motorroller-Fahrzeug, welches eine Antriebseinheit gemäß Anspruch 1 umfasst, wobei ein Aufbewahrungsbehälter für persönliche Gegenstände oberhalb der Antriebseinheit angeordnet ist.

5. Motorroller-Fahrzeug gemäß Anspruch 4,
wobei der Verbrennungsmotor eine Zylinderachse (C2) aufweist, welche sich im Wesentlichen horizontal erstreckt, wobei der Kühlmitteltemperatursensor (103) auf der oberen Seite des Zylinderblocks (32) angeordnet ist, und wobei ein Aufbewahrungsbehälter (18) für persönliche Gegenstände oberhalb des Kühlmitteltemperatursensors (103) angeordnet ist.

## Revendications

1. Ensemble motopropulseur, avec un système d'admission pour un véhicule de type scooter, l'ensemble motopropulseur groupant de manière assemblé d'un seul tenant un moteur thermique, ayant un axe de cylindre (C2) disposé sensiblement horizontalement, avec un système de transmission d'énergie, le système d'admission comprenant :
- un corps d'étranglement (55), disposé immédiatement au-dessus d'une partie de cylindre (22) et ayant un axe (C3) ;
- un filtre à air (56), disposé à l'arrière par rapport au corps d'étranglement (55) ;
- un chemin d'admission (58), s'étendant du filtre à air (56) à une chambre de combustion (37), via le corps d'étranglement (55), et un orifice d'admission, disposé sur un côté supérieur de la partie de cylindre (22), le chemin d'admission (58) étant conformé en U lorsqu'on observe en vue de côté et débouchant vers un côté d'extrémité proximale de la partie de cylindre (22) ; et
- un injecteur de carburant, injectant du carburant dans le chemin d'admission (58),
**caractérisé en ce que**
- l'injecteur de carburant est disposé en une partie, dans le corps d'étranglement (55), qui est disposée sur un côté du chemin d'admission (58) opposé à l'emplacement auquel la partie de cylindre (22) est disposée, et
- l'injecteur de carburant ayant un axe incliné par rapport à un axe du corps d'étranglement (55) ;
- dans lequel la partie de cylindre (22) comprend une culasse (33) incluant un chemin de réfrigérant, un capteur de température de réfrigérant (103), détectant une température de réfrigérant dans la culasse (33), et un bloc-cylindre (32) formant un alésage de cylindre (32a) et comprenant une partie de montage de capteur (104) pour le capteur de température de réfrigérant (103), et
- dans lequel le capteur de température de réfrigérant (103) présente un axe (C5) s'étendant sous un angle aigu par rapport à l'axe de cylindre (C2) et s'étendant sensiblement parallèlement à l'axe (C3) du corps d'étranglement (55).

2. Ensemble motopropulseur selon la revendication 1,
dans lequel l'injecteur de carburant présente un orifice d'injection (60), disposé sur un côté aval d'admission d'un centre de mouvement pivotant d'un clapet monté dans le corps d'étranglement (55) et sur un côté du centre du mouvement pivotant d'une extrémité de côté aval d'une plage de mouvement pivotant de clapet.

3. Ensemble motopropulseur selon l'une quelconque des revendications précédentes,
- dans lequel la partie de montage de capteur (104) fait partie d'une surface placée en regard de la culasse (33), dans le bloc-cylindre (32), et
- la partie de montage de capteur (104) fait partie du chemin de réfrigérant dans la culasse (33) .

4. Véhicule de type scooter, comprenant un ensemble motopropulseur selon la revendication 1,
dans lequel un casier de stockage d'objets personnels est disposé en partie supérieure de l'ensemble motopropulseur.

5. Véhicule de type scooter, comprenant un ensemble motopropulseur selon la revendication 4,
dans lequel le moteur à combustion interne présente un axe de cylindre (C2) s'étendant sensiblement horizontalement, le capteur de température de réfrigérant (103) étant disposé sur un côté supérieur du bloc-cylindre (32) et un casier de stockage d'objets personnels (18) étant disposé en partie supérieure du capteur de température de réfrigérant (103).
